# EUROPÄISCHE PATENTSCHRIFT

(11) **EP 2 512 851 B1**
(45) Veröffentlichungstag und Bekanntmachung des Hinweises auf die Patenterteilung: **03.09.2014**
(21) Anmeldenummer: 10795942.1
(22) Anmeldetag: 10.12.2010
(51) Int. Cl.: B60J 10/00, F16J 15/10

(54) **STOSSVERBINDUNG ZWISCHEN ENDEN VON DICHTUNGSSTRÄNGEN ODER EINES DICHTUNGSSTRANGS**
JOINING ENDS OF WEATHERSTRIP
ABUTTEMENT DE DEUX EXTRÉMITÉS DE JOINTS

(30) Priorität: 23.12.2009 DE 102009060151; 14.12.2009 DE 102009058057
(43) Veröffentlichungstag der Anmeldung: 24.10.2012
(73) Patentinhaber: CQLT SaarGummi Technologies S.à.r.l., 5544 Remich (LU)
(72) Erfinder: RÄSCH, Bernd, 66687 Wadern (DE); BARDAC, Jan, 97231 Raztocno (SK)
(74) Vertreter: Bernhardt, Reinhold
(86) Internationale Anmeldenummer: PCT/EP2010/007549
(87) Internationale Veröffentlichungsnummer: WO 2011/082762

(56) Entgegenhaltungen:
- WO-A1-02/23004
- DE-A1- 1 604 750
- DE-T2- 69 011 936
- GB-A- 2 177 441
- US-A- 5 419 800

## Beschreibung

Die Erfindung betrifft eine Stoßverbindung zwischen Enden von Dichtungssträngen oder eines Dichtungsstrangs, mit einem Verbindungsstück für den Eingriff in stirnseitig offene Hohlräume in den Dichtungssträngen bzw. dem Dichtungsstrang. Die Stoßverbindung betrifft insbesondere zur Abdichtung von Spalten an Fahrzeugkarosserien verwendete Dichtungsstränge, wobei das Verbindungsstück wenigstens eine Einrichtung zur Verhakung mit einer Wand von einem der Hohlräume aufweist.

Eine Stoßverbindung zwischen Dichtungsstrangenden ist z.B. aus der DE 10 2004 021 934 A1 bekannt. Das Verbindungsstück dieser bekannten Stoßverbindung greift kraftschlüssig in die zur Stoßstelle hin offenen Hohlräume in den Dichtungssträngen ein.

Eine Stoßverbindung in Form einer Gehrung zwischen Enden von im Querschnitt U-förmigen Dichtungssträngen geht aus der DE 1 604 750 hervor. Ein gewinkeltes Verbindungsstück greift jeweils zwischen den U-Schenkeln den Dichtungsstränge ein und weist Einrichtungen zur Verhakung mit den Dichtungssträngen auf.

Eine Stoßverbindung der eingangs erwähnten Art beschreibt die US 5 419 800. Ein Verbindungsstück mit einer Vielzahl widerhakenförmiger Vorsprünge greift in die Hohlräume der schlauchförmigen, endseitig aneinander stoßenden Dichtungsstränge ein.

Der Erfindung liegt die Aufgabe zugrunde, eine neue, in ihrer Stabilität verbesserte Stoßverbindung der eingangs Art zwischen Dichtungsstrangenden zu schaffen.

Die diese Aufgabe lösende Stoßverbindung nach der Erfindung ist dadurch gekennzeichnet, dass die Verhakungseinrichtung einen von dem Verbindungsstück senkrecht zur Längsachse der Dichtungsstränge bzw. des Dichtungsstranges vorstehenden Verhakungszapfen umfasst, der im Eingriff in eine Bohrung in der Hohlraumwand steht. Durch diese erfindungsgemäße Verhakung wird das Verbindungsstück innerhalb des betreffenden Hohlraums oder der Hohlräume in Stranglängsrichtung festgelegt und die Stoßverbindung dadurch stabilisiert. Die Stoßverbindung lässt sich in einfacher Weise erst unmittelbar vor dem Einbau herstellen, so dass Ringdichtungen vorteilhaft als offener Strang, ggf. mit einseitig angebrachtem Verbindungsstück, ausgeliefert werden können.

Insbesondere bei einseitiger Anbringung des Verbindungsstücks am offenen Strang kann das Verbindungsstück alternativ oder zusätzlich zu der Verhakung mit der betreffenden Hohlraumwand verklebt oder verschweißt werden.

Alternativ oder zusätzlich kann die Verhakungseinrichtung entgegen der Vorschubrichtung des Verbindungsstücks geneigte Zähne umfassen, die sich in das weiche Elastomermaterials des Dichtungsstrangs eindrücken.

Zweckmäßig weist der Zapfen eine in Vorschubrichtung der Verbindungsstücke abfallende Abschrägung oder Abrundung auf, die das Einschieben des Verbindungsstücks in die stirnseitige Öffnung erleichtert.

In weiterer Ausgestaltung der Erfindung weist das Verbindungsstück ein den Vorschub in die Hohlräume begrenzendes Anschlagstück auf. Das Anschlagstück kann so angeordnet sein, dass in der Anschlagstellung der betreffende Zapfen genau zu der den Zapfen aufnehmenden Bohrung ausgerichtet ist. Je nach der Breite des Anschlagstücks ergibt sich an der Stoßstelle ein Spalt, der z.B. bei einer durch die Stoßverbindung gebildeten Ringdichtung für eine Fahrzeugtür zur Entwässerung genutzt werden kann.

In einer Ausführungsform der Erfindung weisen die Dichtungsstränge bzw. der Dichtungsstrang einen Befestigungsabschnitt und einen vorzugsweise aus weicherem Material als der Befestigungsabschnitt bestehenden Dichtungsabschnitt auf, wobei die Hohlräume jeweils durch einen Längskanal im Befestigungsabschnitt gebildet sind.

Die einen Verhakungszapfen aufnehmende Bohrungen können auf einander gegenüberliegenden Seiten oder auch nur einer Seite des Längskanal vorgesehen sein. Insbesondere sind je einen Verhakungszapfen aufnehmende Bohrungen auf derjenigen Seite des Längskanals gebildet, die einer Befestigungsfläche des Befestigungsabschnitts abgewandt oder zugewandt ist.

In weiterer Ausgestaltung der Erfindung sind die Dichtungsstränge bzw. der Dichtungsstrang zur Befestigung an einem Dichtungssitz mit Hilfe von Kunststoffclipsen vorgesehen. Vorteilhaft weisen die Kunststoffclipse aufnehmende Bohrungen den gleichen Durchmesser wie die die Verhakungszapfen aufnehmenden Bohrungen auf. Zur Herstellung beider Bohrungen kann vorteilhaft das gleiche Bohrwerkzeug eingesetzt werden.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: eine erfindungsgemäße Stoßverbindung in perspektivischer Ansicht,
- Fig. 2 und 3: die Stoßverbindung in zueinander um 90 ° gedrehten, teilweise geschnittenen Seitenansichten,
- Fig. 4: eine Querschnittsansicht der Stoßverbindung von Fig. 1,
- Fig. 5 und 6: ein in der Stoßverbindung von Fig. 1 bis 4 verwendetes Verbindungsstück in zueinander um 90 ° gedrehten Ansichten, und
- Fig. 7: weitere Ausführungsbeispiele für Verbindungsstücke einer erfindungsgemäßen Stoßverbindung.

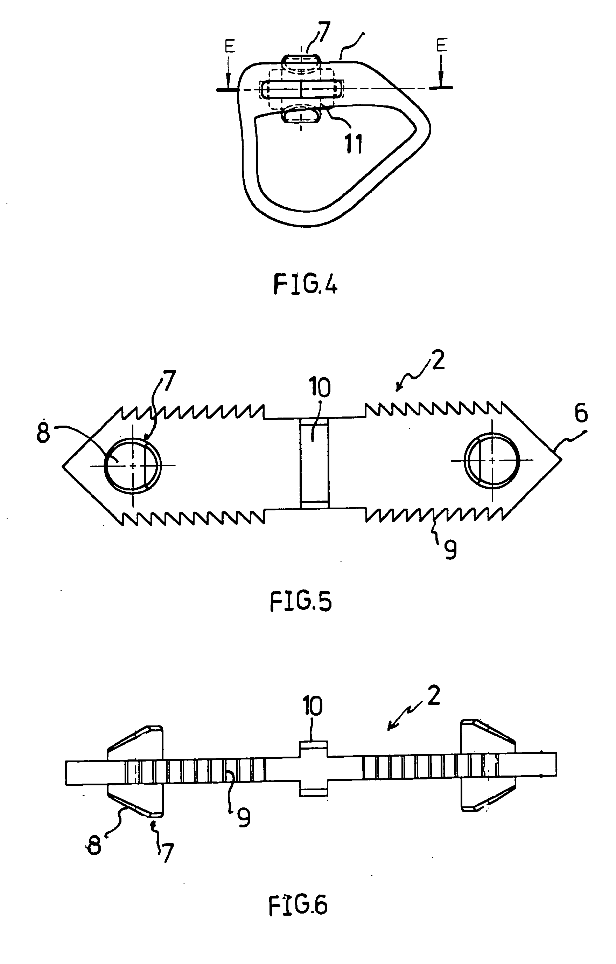

Endabschnitte zweier Dichtungsstränge 1 und 1' oder eines einzigen, an den Enden zu einem Ring verbundenen Dichtungsstrangs sind über ein in Fig. 5 und 6 gesondert dargestelltes Verbindungsstück 2 miteinander verbunden. Die Dichtungsstränge bzw. der Dichtungsstrang weisen jeweils einen Befestigungsabschnitt 3 mit einer an einen Dichtungssitz anlegbaren Befestigungsfläche 12 und einen in diesem Ausführungsbeispiel schlauchförmigen Dichtungsabschnitt 4 auf. Ein flacher Längskanal 5 in dem Befestigungsabschnitt 3 bildet jeweils einen stirnseitig offenen Hohlraum, in welchen das Verbindungsstück 2 eingreift.

Wie aus Fig. 5 und 6 hervorgeht, ist das Verbindungsstück 2 entsprechend dem flachen Längskanal 5 als flacher Körper ausgebildet, der in dem gezeigten Beispiel an beiden Längsenden eine Spitze 6 aufweist.

Jeweils nahe den spitzen Enden stehen von einander gegenüberliegenden Breitseiten des Verbindungsstücks 2 in entgegengesetzte Richtungen weisende Zapfen 7 vor, die eine zum jeweiligen spitzen Ende hin abfallende Abschrägung 8 aufweisen.

Zähne 9 an gegenüberliegenden Schmalseiten des Verbindungsstücks 2 sind von der jeweils nächstliegenden Spitze 6 weggeneigt.

In der Mitte des Verbindungsstücks 2 stehen von den Breitseiten in entgegengesetzte Richtungen weisende Anschlagstücke 10 vor, die das Eindringen des Verbindungsstücks in die Längskanäle 5 der mit ihren Stirnseiten einander gegenüberliegenden Dichtungsstränge 1,1' begrenzen. Anstelle der zwei Anschlagstücke 10 könnte auch nur ein einziges Anschlussstück gebildet sein.

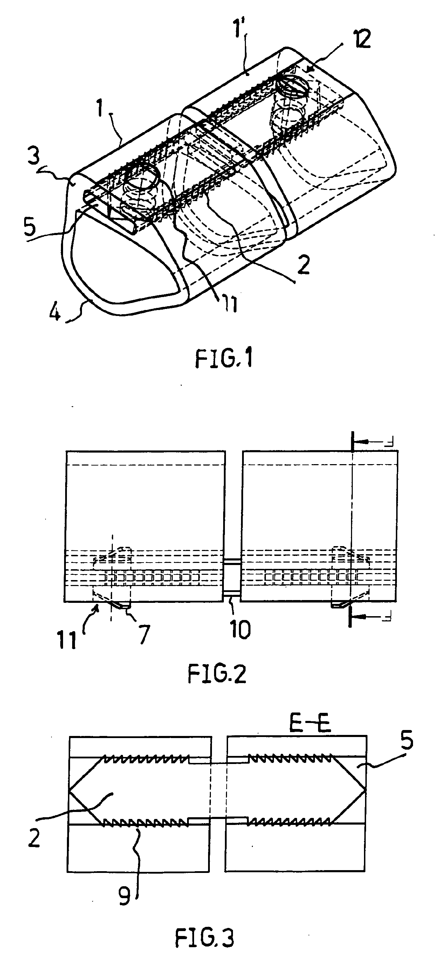

Zur Herstellung der in Fig. 1 bis 4 gezeigten Stoßverbindung wird das Verbindungsstück 2 mit seinen Längsenden voran in den betreffenden Längskanal 5 in den Dichtungssträngen 1 und 1' eingeführt. Die Spitzen 6 vereinfachen diesen Vorgang. Den weiteren Vorschub in den Längskanal 5 hinein erleichtern die Abschrögungen 8, die eine problemlose Aufweitung des Längskanals ermöglichen. Beim Vorschub des Verbindungsstücks 2 bis zum Anstoß gegen die Anschlagsstücke 10 gelangen die Zapfen 7 jeweils in eine den Befestigungsabschnitt 3 der Dichtungsstränge durchsetzende Bohrung 11. Damit ist das Verbindungsstück 2 in den Längskanälen 5 der Dichtungsstränge 1,1' fest verhakt. Zur weiteren Verhakung tragen die entgegen der Vorschubrichtung geneigten Zähne 9 bei.

Die Anschlagstücke 10 könnten schmaler oder auch breiter als in dem gezeigten Ausführungsbeispiel sein oder auch ganz wegfallen.

In dem gezeigten Ausführungsbeispiel wird das zur Herstellung der Bohrungen 11 verwendete Bohrwerkzeug ferner dazu verwendet, in den Befestigungsabschnitt 3 über die Länge des Dichtungsstrangs verteilte Bohrungen für die Aufnahme von Kunststoffclipsen einzubringen, mit deren Hilfe der Dichtungsstrang an einem Dichtungssitz befestigt wird. Entsprechend weisen die Bohrungen 11 den gleichen Durchmesser wie die genannten Bohrungen für die Zapfen (nicht gezeigt) auf.

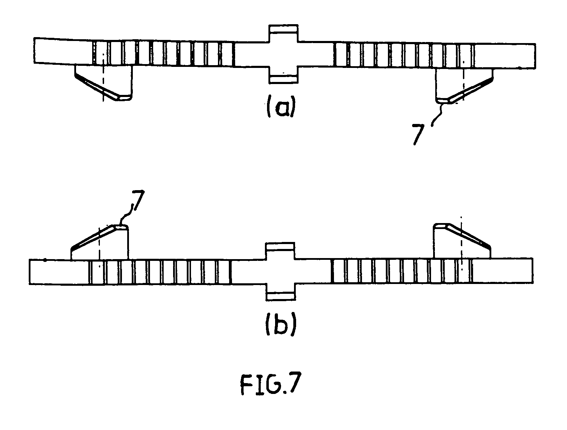

Die Figuren 7a und 7b zeigen Verbindungsstücke, die Verhakungszapfen 7 jeweils nur auf einer Seite aufweisen. Die Verhakungszapfen 7 des Verbindungsstücks von Fig. 7a greifen in Bohrungen ein, die auf der zur Befestigungsfläche 12 zugewandten Seite des Längskanals 5 liegen, während die Verhakungszapfen 7 des Verbindungsstücks von Fig. 7b in Bohrungen auf der anderen Seite des Längskanals 5 eingreifen. Vorteilhaft können in letzterem Fall die Verhakungszapfen 7 die Lackoberfläche des Dichtungssitzes nicht beeinträchtigen.

## Patentansprüche

1. Stoßverbindung zwischen Enden (1, 1') von Dichtungssträngen oder eines Dichtungsstrangs, mit einem Verbindungsstück (2) das im Eingriff in stirnseitig offene Hohlräume (5) in den Dichtungssträngen (1,1') bzw. dem Dichtungsstrang ist, wobei das Verbindungsstück (2) wenigstens eine Einrichtung (7,9) zur Verhakung mit einer Wand von einem der Hohlräume (5) aufweist,
**dadurch gekennzeichnet,**
**dass** die Verhakungseinrichtung einen von dem Verbindungsstück (2) senkrecht zur Längsachse der Dichtungsstränge (1,1') bzw. des Dichtungsstranges vorstehenden Verhakungszapfen (7) umfasst, der im Eingriff in eine Bohrung (11) in der Hohlraumwand steht.

2. Stoßverbindung nach Anspruch 1,
**dadurch gekennzeichnet,**
**dass** die Verhakungseinrichtung entgegen der Vorschubrichtung des Verbindungsstücks (2) geneigte Zähne (9) umfasst.

3. Stoßverbindung nach Anspruch 1 oder 2,
**dadurch gekennzeichnet,**
**dass** der Verhakungszapfen (7) eine in Vorschubrichtung des Verbindungsstücks (2) abfallende Abschrägung (8) aufweisen.

4. Stoßverbindung nach einem der Ansprüche 1 bis 3,
**dadurch gekennzeichnet**,
das Verbindungsstück (2) ein die Vorschubtiefe in die Hohlräume (5) begrenzendes Anschlagstück (10) aufweist.

5. Stoßverbindung nach einem der Ansprüche 1 bis 4,
**dadurch gekennzeichnet,**
**dass** die Dichtungsstränge (1,1') bzw. der Dichtungsstrang einen Befestigungsabschnitt (3) und einen vorzugsweise aus weicherem Material als der Befestigungsabschnitt (3) bestehenden Dichtungsabschnitt (4) aufweisen bzw. aufweist und die Hohlräume jeweils durch einen Längskanal (5) in dem Befestigungsabschnitt (3) gebildet sind.

6. Stoßverbindung nach Anspruch 5,
**dadurch gekennzeichnet,**
**dass** auf einander gegenüberliegenden Seiten oder nur einer Seite des Längskanals (5) je einen Verhakungszapfen (7) aufnehmende Bohrungen (11) vorgesehen sind.

7. Stoßverbindung nach Anspruch 6,
**dadurch gekennzeichnet,**
**dass** je einen Verhakungszapfen (7) aufnehmende Bohrungen (11) auf derjenigen Seite des Längskanals (5) liegen, die einer Befestigungsfläche (12) des Befestigungsabschnitts (3) ab- oder zugewandt ist.

8. Stoßverbindung nach einem der Ansprüche 5 bis 7,
**dadurch gekennzeichnet,**
**dass** die Hohlräume als flache, zu einer Befestigungsfläche (12) des Befestigungsabschnitts (3) in Querschnitt parallele Längskanäle (5) ausgebildet sind.

9. Stoßverbindung nach einem der Ansprüche 1 bis 8,
**dadurch gekennzeichnet,**
**dass** die Dichtungsstränge (1,1') bzw. der Dichtungsstrang zur Befestigung an einem Dichtungssitz mit Hilfe von Kunststoffclipsen vorgesehen ist.

10. Stoßverbindung nach Anspruch 9,
**dadurch gekennzeichnet,**
**dass** für die Kunststoffclipse in dem Befestigungsabschnitt vorgesehene Bohrungen den gleichen Bohrdurchmesser wie die Bohrungen (11) zur Aufnahme der Verhakungszapfen (7) aufweisen.

11. Stoßverbindung nach einem der Ansprüche 1 bis 10,
**dadurch gekennzeichnet,**
**dass** das Verbindungsstück (2) in wenigstens einem der Hohlräume (5) mit der Hohlraumwand verklebt oder/und verschweißt ist.

## Claims

1. Butt joint between ends (1, 1') of sealing strands or of a sealing strand, having a connecting piece (2) which engages in open-ended cavities (5) in the sealing strands (1, 1') or the sealing strand, wherein the connecting piece (2) has at least one device (7, 9) for locking with a wall of one of the cavities (5), **characterized in that** the locking device comprises a locking lug (7) which projects from the connecting piece (2) perpendicularly to the longitudinal axis of the sealing strands (1, 1') or of the sealing strand and engages in a bore (11) in the cavity wall.

2. Butt joint according to Claim 1, **characterized in that** the locking device comprises teeth (9) which are inclined counter to the advancing direction of the connecting piece (2).

3. Butt joint according to Claim 1 or 2, **characterized in that** the locking lug (7) has a bevel (8) which slopes in the advancing direction of the connecting piece (2).

4. Butt joint according to one of Claims 1 to 3, **characterized in that** the connecting piece (2) has a stop piece (10) which limits the advancing depth into the cavities (5).

5. Butt joint according to one of Claims 1 to 4, **characterized in that** the sealing strands (1, 1') or the sealing strand have or has a fastening portion (3) and a sealing portion (4) preferably consisting of a softer material than the fastening portion (3), and the cavities are each formed by a longitudinal duct (5) in the fastening portion (3).

6. Butt joint according to Claim 5, **characterized in that** bores (11) each receiving a locking lug (7) are provided on mutually opposite sides or only one side of the longitudinal duct (5).

7. Butt joint according to Claim 6, **characterized in that** bores (11) each receiving a locking lug (7) are situated on that side of the longitudinal duct (5) which faces away from or faces a fastening surface (12) of the fastening portion (3).

8. Butt joint according to one of Claims 5 to 7, **characterized in that** the cavities are formed as shallow longitudinal ducts (5) which are parallel in cross section to a fastening surface (12) of the fastening portion (3).

9. Butt joint according to one of Claims 1 to 8, **characterized in that** the sealing strands (1, 1') or the sealing strand are or is provided for fastening to a sealing seat with the aid of plastic clips.

10. Butt joint according to Claim 9, **characterized in that** bores provided for the plastic clips in the fastening portion have the same bore diameter as the bores (11) for receiving the locking lugs (7).

11. Butt joint according to one of Claims 1 to 10, **characterized in that** the connecting piece (2) is adhesively bonded and/or welded to the cavity wall in at least one of the cavities (5).

## Revendications

1. Jonction bout à bout entre des extrémités (1,1') de profils d'étanchéité ou d'un profil d'étanchéité, à l'aide d'une pièce de jonction (2) qui est en prise dans des espaces creux (5) ouverts côté frontal dans les profils (1,1') ou le profil d'étanchéité, la pièce de jonction (2) présentant au moins un dispositif (7,9) destiné à s'ancrer à une paroi d'un des espaces creux (5), **caractérisée en ce que** le dispositif d'ancrage comprend un tenon d'ancrage (7) proéminent par rapport à la pièce de jonction (2), perpendiculaire à l'axe longitudinal des profils (1,1') ou du profil d'étanchéité, qui est en prise dans un trou (11) dans la paroi de l'espace creux.

2. Jonction bout à bout selon la revendication 1, **caractérisée en ce que** le dispositif d'ancrage présente des dents (9) inclinées dans le sens inverse du sens d'avancement de la pièce de jonction (2).

3. Jonction bout à bout selon la revendication 1 ou 2, **caractérisée en ce que** le tenon d'ancrage (7) présente un biseau (8) diminuant dans le sens d'avancement de la pièce de jonction (2).

4. Jonction bout à bout selon l'une quelconque des revendications 1 à 3, **caractérisée en ce que** la pièce de jonction (2) présente une pièce de butée (10) limitant la profondeur d'avancement dans les espaces creux (5).

5. Jonction bout à bout selon l'une quelconque des revendications 1 à 4, **caractérisée en ce que** les profils (1,1') ou le profil d'étanchéité présente(nt) une section de fixation (3) et une section d'étanchéité (4) de préférence constituée par un matériau plus souple que la section de fixation (3) et les espaces creux sont à chaque fois formés par un canal longitudinal (5) dans la section de fixation (3).

6. Jonction bout à bout selon la revendication 5, **caractérisée en ce que** des trous (11) recevant chacun un tenon d'ancrage (7) se situent sur des côtés opposés l'un à l'autre ou sur seulement un côté du canal longitudinal (5).

7. Jonction bout à bout selon la revendication 6, **caractérisée en ce que** des trous (11) recevant chacun un tenon d'ancrage (7) se situent sur le côté du canal longitudinal (5) qui est orienté vers ou à l'opposé d'une surface de fixation (12) de la section de fixation (3).

8. Jonction bout à bout selon l'une quelconque des revendications 5 à 7, **caractérisée en ce que** les espaces creux sont conçus comme des canaux longitudinaux (5) plats, parallèles, en coupe transversale, à une surface de fixation (12) de la section de fixation (3).

9. Jonction bout à bout selon l'une quelconque des revendications 1 à 8, **caractérisée en ce que** les profils (1,1') ou le profil d'étanchéité est/sont destiné(s) à la fixation à un siège de joint à l'aide de clips en matériau synthétique.

10. Jonction bout à bout selon la revendication 9, **caractérisée en ce que** les trous destinés aux clips en matériau synthétique dans la section de fixation présentent le même diamètre d'alésage que les trous (11) destinés à recevoir le tenon d'ancrage (7).

11. Jonction bout à bout selon l'une quelconque des revendications 1 à 10, **caractérisée en ce que** la pièce de jonction (2) est collée et/ou soudée à la paroi de l'espace creux dans au moins un des espaces creux (5).
